# EUROPEAN PATENT APPLICATION

(11) **EP 2 447 820 A2**
(43) Date of publication of application: **02.05.2012**
(21) Application number: 11184691.1
(22) Date of filing: 11.10.2011
(51) Int. Cl.: G06F 3/048, G01C 21/36

(54) **Display device, display method, display program, and computer readable medium**

(30) Priority: 26.10.2010 JP 2010239576
(71) Applicant: Aisin Aw Co., Ltd., Aichi 444-1164 (JP)
(72) Inventor: Nagasaka, Hidenori, Anjo-shi, Aichi 444-1192 (JP)
(74) Representative: Kramer - Barske - Schmidtchen

(57) **Abstract**

A display device (1) comprising a display unit (20) that displays an image, a touch panel (10) that is provided on a front surface of the display unit (20), a position detection unit (31) that detects a position of a user's finger (F) contacting the touch panel (10), a display control unit (32) that updates an image display position in accordance with the position of the user's finger (F), and a moving amount calculation unit (33) that, if the user's finger (F) lifts from the touch panel (10), calculates a reference moving amount and direction of the image display position, wherein the display control unit (32), if the user's finger (F) lifts from the touch panel (10), first updates the image display position, and next updates in a predetermined display cycle the image display position in the moving direction until the moving amount is equal to or less than a minimum moving amount.

## Description

The present invention relates to a display device, a display method, a display program, and a computer readable medium.

In past car navigation devices and the like, a map shown on a display is scrolled up, down, left, or right, and a list shown on the display is scrolled in a specific direction. Operational input for thus scrolling an image shown on the display includes operational input using a touch panel or a joystick, for example.

A proposed scroll control device of a screen (JP-A-H10-161628, for example) performs a control that scrolls an image by a vector based on a change vector of an input coordinate while coordinate input is performed by a coordinate input part using a touch panel, and scrolls the image when the coordinate input is stopped by a vector based on a change vector of an input coordinate just before coordinate input is stopped.

In the device of the related art described above, the initial scrolling speed after the user's finger lifts from the touch panel is determined by the change vector at the moment the user's finger lifts from the touch panel. Attenuation of the scrolling speed is subsequently set in a manner similar to the action of a friction force. Therefore, the time that the scrolling continues varies greatly in proportion to the magnitude of the change vector at the moment the user's finger lifts from the touch panel. For example, if the user moves his or her finger quickly to scroll an image, the time that the scrolling continues is twice as long if the speed at which the user's finger moves is twice as fast. Thus, the time that the scrolling continues may not always match the user's intention.

It is an object of the present invention in the light of the foregoing to improve the scrolling characteristics. This object is achieved by a display device according to claim 1, a display method according to claim 6, a display program according to claim 11, and a computer readable medium according to claim 12. Scrolling an image at a speed that reflects a user's intention is enabled. Further developments are given in the dependent claims. A new reaction of the device to a command input by a user is disclosed.

According to a first aspect, fluctuations in a total moving time of the image can be suppressed with respect to fluctuations in a moving speed of the user's finger when the user lifts his or her finger from the touch panel. Thus, the image can be scrolled at a speed that corresponds to the user's intention.

According to a second aspect, the image can be scrolled in the specific direction at a speed that corresponds to the user's intention.

According to a third aspect, it is possible to prevent the movement of the list stopping with list items cut off at end portions of a display unit.

According to a fourth aspect, the map can be scrolled at a speed that reflects the user's intention of wanting to slowly scroll through a wide area map displayed and wanting to quickly scroll through a detail map displayed.

According to a fifth aspect, for example, the image can be scrolled at a speed that corresponds to the user's intention of wanting to quickly scroll an image by repeating a scrolling operation.

Further features follow from the description of embodiments referring to the drawings, from which:
FIG 1 is a block diagram that illustrates a display device according to a first embodiment;
FIG 2 is a flowchart of a display control process;
FIG 3 is a flowchart of a flick movement process;
FIGS. 4A to 4C are diagrams that illustrate an example of a map displayed on a display, wherein FIG 4A is a diagram that shows a user's finger starting to contact a touch panel, FIG 4B is a diagram that shows the user's finger moving while in contact with the touch panel, and FIG 4C is a diagram that shows an image moved after the user's finger lifts from the touch panel;
FIGS. 5A to 5C are diagrams that illustrate an example of a list formed of a plurality of items displayed on a display, wherein FIG 5A is a diagram that shows the user's finger starting to contact the touch panel, FIG 5B is a diagram that shows the user's finger moving while in contact with the touch panel, and FIG 5C is a diagram that shows an image moved after the user's finger lifts from the touch panel;
FIG 6 is a table that illustrates a relationship in the display control process between a distance from a finger position detected by a position detection unit a predetermined time before a finger position is last detected by the position detection unit to the finger position last detected by the position detection unit, and a total moving time and a total moving amount when a display control unit moves an image in a subsequent flick movement process; and
FIG 7 is a flowchart of a display control process according to a second embodiment.

Hereinafter, embodiments of a display device, a display method, a display program, and a computer readable medium will be described in detail with reference to the drawings. However, the present invention is not limited to such embodiments. In the following description, the display device is installed in a vehicle as part of a car navigation system.

### First Embodiment

First, a display device, a display method, a display program, and a computer readable medium according to a first embodiment will be described. The first embodiment first updates a display position of an image by moving the image display position in a moving direction by a reference moving amount if a user's finger F lifts from a touch panel. Next, using a value that multiplies the moving amount in a previous update of the image display position by a predetermined coefficient (preferably positive) of less than one as the moving amount in a current update, the embodiment updates in a predetermined cycle the image display position in the moving direction until the moving amount is equal to or less than a minimum moving amount.

### Constitution

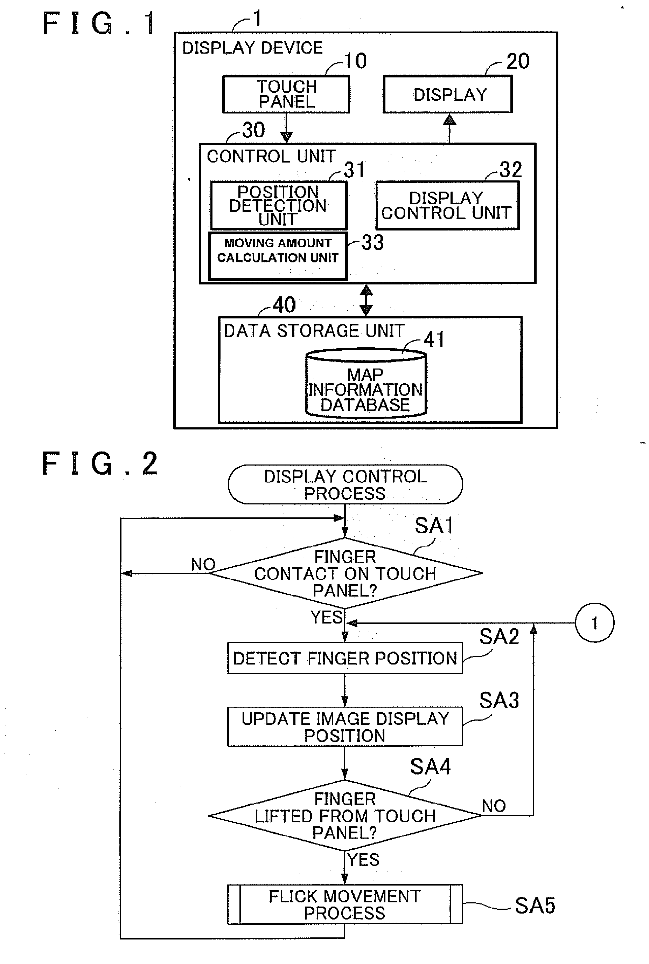

First, the constitution of the display device according to the first embodiment will be described. FIG 1 is a block diagram that illustrates the display device according to the first embodiment. As shown in FIG 1, a display device 1 includes a touch panel 10, a display 20, a control unit 30, and a data storage unit 40.

### Constitution: Touch Panel

The touch panel 10 is an input unit that, through pressure from a user's finger F or the like, accepts various types of operations that include operational input for moving an image displayed on the display 20. The touch panel 10 is formed transparent or semi-transparent and provided overlapping with a display screen of the display 20 on the front of the display 20. A commonly known touch panel that includes an operation position detection unit based on a resistive film, capacitance, or other system may be used as the touch panel 10.

### Constitution: Display

The display 20 is a display unit that displays images based on a control of the control unit 30. Note that the specific constitution of the display 20 may take on any form, and a flat panel display such as a commonly known liquid crystal display or organic EL display may be used.

### Constitution: Control Unit

The control unit 30 controls the display device 1 Specifically, the control unit 30 is a computer configured to include a CPU, various programs that are interpreted and executed in the CPU (including an OS and other basic control programs, and application programs that are activated in the OS to carry out specific functions), and an internal memory such as a RAM for storing the programs and various data. In particular, the display program according to the first embodiment is installed in the display device 1 through any storage medium or network, and configures various portions of the control unit 30 in substance.

The control unit 30 includes a position detection unit 31, a display control unit 32, and a moving amount calculation unit 33 in terms of functional concept. The position detection unit 31 detects the position of the user's finger F contacting the touch panel 10 in a predetermined detection cycle. The display control unit 32 updates the display position of information on the display 20 in a predetermined display cycle. The moving amount calculation unit 33 calculates a reference moving amount of the display position of information when the user's finger F lifts from the touch panel 10. The processes executed by the various portions of the control unit 30 will be described in detail later.

### Constitution: Data Storage Unit

The data storage unit 40 is a storage unit that stores programs and various data required for operation of the display device 1, and has a configuration that uses a magnetic storage medium such as a hard disk (not shown) as an external memory device, for example. However, any other storage mediums, including a semiconductor storage medium such as a flash memory or an optical storage medium such as a DVD or Blu-ray disc, can be used in place of or in combination with the hard disk.

The data storage unit 40 includes a map information database 41. (Note that database will be abbreviated to "DB" below.)

The map information DB 41 is a map information storage unit that stores map information. The "map information" is configured to include link data (e.g., link numbers, connection node numbers, road coordinates, road types, number of lanes, travel restrictions), node data (node numbers and coordinates), feature data (e.g., traffic signals, road signs, guard rails, buildings), target feature data (e.g., intersections, stop lines, railroad crossings, curves, ETC toll booths, expressway exits), facility data (e.g., facility locations and facility types), topography data, and map display data for displaying a map on the display 20.

### Processing: Display Control Process

Next, a display control process executed by the display device 1 thus configured will be described. FIG 2 is a flowchart of the display control process (steps in the descriptions of each process below are abbreviated to "S"). The display control process is activated, for example, after the display device 1 is powered on and an image such as a map or a list is displayed on the display 20.

As shown in FIG 2, once the display control process is started, the position detection unit 31 stands by until it is determined on the basis of an output from the touch panel 10 that the user's finger F contacted the touch panel 10 (SA1: No). If the user's finger F contacted the touch panel 10 (SA1: Yes), the position detection unit 31 detects a position at which the user's finger F (referred to as a "finger position" below as appropriate) contacted the touch panel 10 (SA2). The finger position is detected as a coordinate on the touch panel 10, for example.

Next, the display control unit 32 updates the display position of the image displayed on the display 20 in response to the finger position detected by the position detection unit 31 at SA2 (SA3). However, the display control unit 32 does not update the image display position if the finger position detected by the position detection unit 31 at SA2 is the first finger position detected after the user's finger F contacted the touch panel 10. However, if at least one finger position has already been detected by the position detection unit 31 at SA2 after the user's finger F contacted the touch panel 10, the display control unit 32 specifies a displacement vector of the finger position based on a difference between the finger position detected by the position detection unit 31 in the previous processing at SA2, and the finger position detected by the position detection unit 31 in the current processing at SA2. The display control unit 32 then moves the image display position by a moving amount that corresponds to the specified displacement vector. Thus, the image displayed on the display 20 is scrolled in response to the movement of the user's finger F contacting the touch panel 10.

Next, the position detection unit 31 determines whether the user's finger F has lifted from the touch panel 10 based on the output from the touch panel 10 (SA4). For example, if no contact with the touch panel 10 is detected, the position detection unit 31 determines that the user's finger F has lifted from the touch panel 10.

Consequently, if the user's finger F has not lifted from the touch panel 10 (SA4: No), the control unit 30 returns to SA2, and the processing from SA2 to SA4 is repeated in a predetermined cycle (e.g., 20 milliseconds) until the user's finger F lifts from the touch panel 10. Thus, while the user's finger F is in contact with the touch panel 10, the position detection unit 31 detects the position of the user's finger F contacting the touch panel 10 in a predetermined detection cycle (e.g., 20 milliseconds), and the display control unit 32 updates the display position of the image displayed on the display 20 in a predetermined display cycle (e.g., 20 milliseconds) in response to the position of the user's finger F detected by the position detection unit 31.

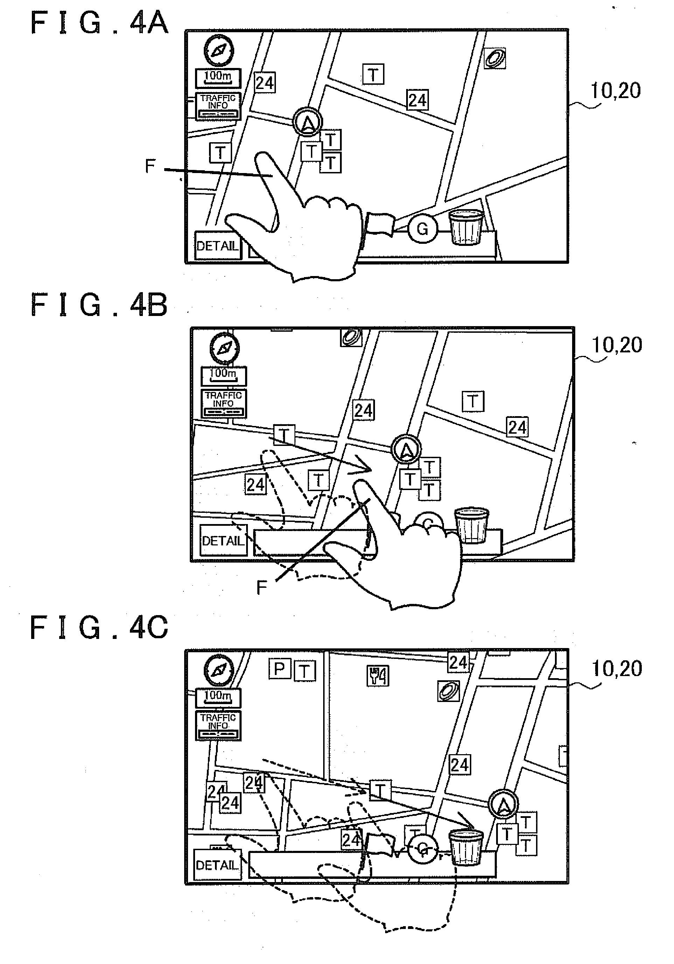

FIGS. 4A to 4C are diagrams that illustrate an example of a map displayed on the display 20, wherein FIG 4A is a diagram that shows the user's finger F starting to contact the touch panel 10, FIG 4B is a diagram that shows the user's finger F moving while in contact with the touch panel 10 (performing a so-called dragging operation), and FIG 4C is a diagram that shows the image moved after the user's finger F lifts from the touch panel 10 (after performing a so-called flicking operation). If a map is displayed on the display 20 as shown in FIGS. 4A to 4C, in response to the finger position detected by the position detection unit 31 at SA2 in FIG 2, the display control unit 32 updates the display position of the map displayed on the display 20 in the processing at SA3. Thus, as shown in FIGS. 4A and 4B, the map display position is sequentially updated in response to the movement of the user's finger F contacting the touch panel 10 (movement following the arrow in FIG 4B).

Note that, if the moving direction of the image display position is limited to a specific direction (e.g., a list formed of a plurality of items is displayed on the display 20, and the moving direction of the image display position is limited to a listing direction of the list items), the display control unit 32 specifies a displacement vector of the finger position based on a difference between the finger position detected by the position detection unit 31 in the previous processing at SA2, and the finger position detected by the position detection unit 31 in the current processing at SA2. The display control unit 32 then moves the image display position in the specific direction by a moving amount that corresponds to the specific direction component of the specified displacement vector.

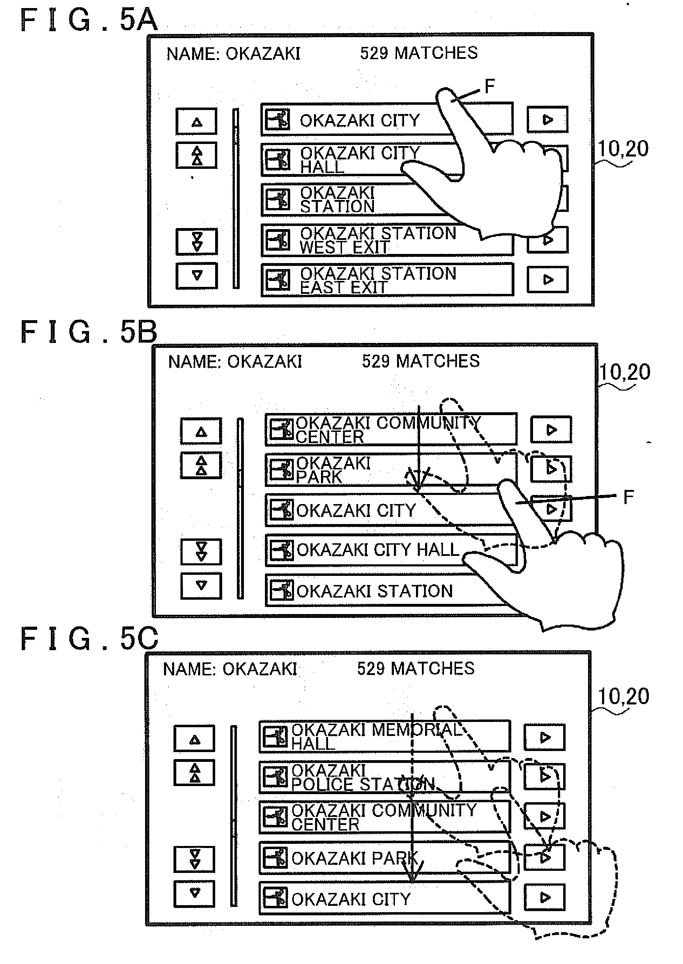

FIGS. 5A to 5C are diagrams that illustrate an example of a list formed of a plurality of items displayed on the display 20, wherein FIG 5A is a diagram that shows the user's finger F starting to contact the touch panel 10, FIG 5B is a diagram that shows the user's finger F moving while in contact with the touch panel 10 (performing a so-called dragging operation), and FIG 5C is a diagram that shows the image moved after the user's finger F lifts from the touch panel 10 (after performing a so-called flicking operation). In response to the finger position detected by the position detection unit 31 at SA2 in FIG 2, the display control unit 32 updates the display position of the list displayed on the display 20 in the processing at SA3. Thus, as shown in FIGS. 5A and 5B, the list display position is sequentially updated in response to the specific direction component of the movement of the user's finger F contacting the touch panel 10 (the arrow in FIG 5B).

Returning to FIG 2, if the user's finger F has lifted from the touch panel 10 (SA4: Yes), the display control unit 32 executes a flick movement process (SA5). The control unit 30 then returns to SA1.

### Processing: Flick Movement Process

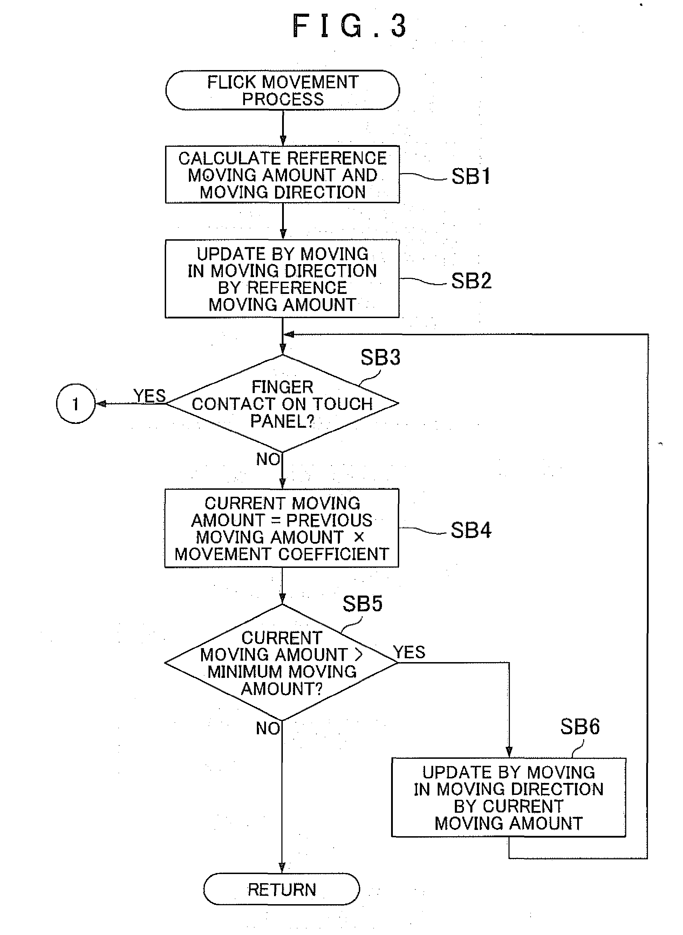

Here, the flick movement process will be described. FIG 3 is a flowchart of the flick movement process.

Once the flick movement process is started, the moving amount calculation unit 33 calculates the reference moving amount and moving direction of the image display position (SB1). The reference moving amount and moving direction are the moving amount and direction that serve as a reference for scrolling the image after the user's finger F lifts from the touch panel 10.

Specifically, the moving amount calculation unit 33 calculates the reference moving amount and moving direction of the image display position based on the distance and direction from the position of the user's finger F detected by the position detection unit 31 a predetermined time before the position of the user's finger F is last detected by the position detection unit 31 at SA2 in FIG 2 (e.g., the finger position detected by the position detection unit 31 in the next-to-last processing at SA2) to the position of the user's finger F last detected by the position detection unit 31 (e.g., the finger position detected by the position detection unit 31 in the last processing at SA2).

For example, the moving amount calculation unit 33 sets the reference moving amount as a value that multiplies a distance, from the finger position detected by the position detection unit 31 in the next-to-last processing at SA2 to the finger position detected by the position detection unit 31 in the last processing at SA2, by a predetermined initial speed movement parameter Is (e.g., 0.4). In addition, the moving amount calculation unit 33 sets the reference moving direction as a direction from the finger position detected by the position detection unit 31 in the next-to-last processing at SA2 to the finger position detected by the position detection unit 31 in the last processing at SA2.

Note that, if the moving direction of the image display position is limited to a specific direction by the display control unit 32, the moving amount calculation unit 33 calculates the reference moving amount based on the distance of the specific direction component (e.g., the distance in the listing direction of list items) between the position of the user's finger F last detected by the position detection unit 31 at SA2 in FIG 2 and the position of the user's finger F detected a predetermined time beforehand by the position detection unit 31.

In such case, the moving amount calculation unit 33 sets the reference moving amount as a value that multiplies a distance of the specific direction component, between the finger position detected by the position detection unit 31 in the last processing at SA2 and the finger position detected by the position detection unit 31 in the next-to-last processing at SA2, by the initial speed movement parameter Is. In addition, the moving amount calculation unit 33 sets the moving direction as the direction of the specific direction component among the direction from the finger position detected by the position detection unit 31 in the next-to-last processing at SA2 to the finger position detected by the position detection unit 31 in the last processing at SA2.

Next, the display control unit 32 updates the image display position by moving the image display position in the moving direction calculated by the moving amount calculation unit 33 at SB 1 by the reference moving amount similarly calculated by the moving amount calculation unit 33 at SB1 (SB2).

The position detection unit 31 then determines on the basis of an output from the touch panel 10 whether the user's finger F contacted the touch panel 10 (SB3). If the user's finger F contacted the touch panel 10 (SB3: Yes), the control unit 30 ends the flick movement process and returns to SA2 in FIG 2.

However, if the user's finger F is not contacting the touch panel 10 (SB3: No), the display control unit 32 calculates the moving amount in the current update as a value that multiplies the moving amount in a previous update of the image display position in the flick movement process by a movement coefficient (SB4). Here, a predetermined coefficient of less than one (e.g., 0.99) is used as the movement coefficient.

Note that, if the image displayed on the display 20 is a map, the display control unit 32 may set the movement coefficient to a value that varies depending on a scale of the map. For example, a formula that calculates the movement coefficient from the map scale may be stored in advance in the data storage unit 40, and the formula used by the display control unit 32 to calculate the movement coefficient from the map scale. In such case, for example, a larger map scale (that is, a wider map area displayed on the display 20) results in a smaller movement coefficient. Thus, if the map displayed on the display 20 is a wide area map, the moving amount within the map can be decreased. Conversely, if the map displayed on the display 20 is a detail map, the moving amount within the map can be increased. Therefore, the map can be scrolled at a speed that reflects the user's intention of wanting to slowly scroll through a wide area map displayed and wanting to quickly scroll through a detail map displayed.

Next, the display control unit 32 determines whether the current moving amount calculated at SB4 is greater than the minimum moving amount (SB5). As the minimum moving amount, a minimum unit that an image displayed on the display 20 can be moved (e.g., one dot) may be used, for example.

If the image displayed on the display 20 is a list formed of a plurality of items, the minimum moving amount may be a display width or a display height per list item. In such case, the minimum moving amount is the display width per list item when the list items are listed in a display width direction, and the minimum moving amount is the display height per list item when the list items are listed in a display height direction.

If the determination result at SB5 is that the current moving amount calculated at SB4 is not greater than the minimum moving amount (is equal to or less than the minimum moving amount) (SB5: No), the control unit 30 ends the flick movement process and returns to SA1 of the display control process in FIG 2.

However, if the determination result at SB5 is that the current moving amount calculated at SB4 is greater than the minimum moving amount (SB5: Yes), the display control unit 32 updates the image display position by moving the image display position in the moving direction calculated at SB1 by the current moving amount calculated at SB4 (SB6). The display control unit 32 subsequently repeats the processing from SB3 to SB6 in a predetermined display cycle until it is determined at SB3 that the user's finger F contacts the touch panel 10, or it is determined at SB5 that the current moving amount is equal to or less than the minimum moving amount.

If a map is displayed on the display 20 as shown in FIGS. 4A to 4C, the display control unit 32 repeats the processing from SB3 to SB6 in a predetermined display cycle to update the display position of the map displayed on the display 20. Thus, as shown in FIG 4C, even after the user's finger F lifts from the touch panel 10, the map display position is sequentially updated in accordance with the moving direction calculated at SB1 and the moving amount calculated at SB4.

Alternatively, if a list formed of a plurality of items is displayed on the display 20 as shown in FIGS. 5A to 5C, the display control unit 32 repeats the processing from SB3 to SB6 in a predetermined display cycle to update the display position of the list displayed on the display 20. Thus, as shown in FIG 5C, even after the user's finger F lifts from the touch panel 10, the list display position is sequentially updated in accordance with the moving direction calculated at SB1 and the moving amount calculated at SB4.

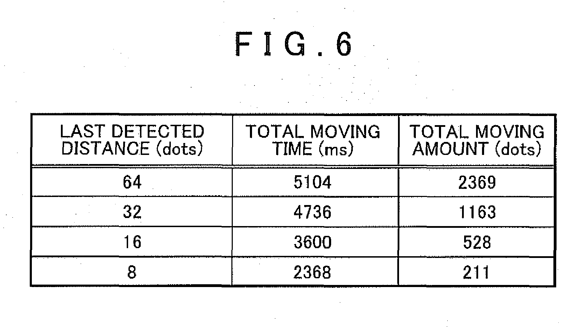

FIG 6 is a table that illustrates a relationship in the display control process between the distance from the finger position detected by the position detection unit 31 a predetermined time before the finger position is last detected by the position detection unit 31 to the finger position last detected by the position detection unit 31 (referred to as a "last detected distance" below), and a total moving time and a total moving amount when the display control unit 32 moves an image in the subsequent flick movement process. According to FIG 6, for example, in a comparison of the total moving time for a last detected distance of 64 dots and that for a last detected distance of 32 dots, although the last detected distance doubles from 32 dots to 64 dots, the total moving time is kept to an increase of approximately 1.1 times. In other words, if the user lifts his or her finger from the touch panel 10 while quickly moving his or her finger on the touch panel 10 (if the last detection distance increases), the image is moved while suppressing an increase in the total moving time in line with the user's intention of wanting to quickly finish scrolling.

### Effects

According to the first embodiment as described above, if the user's finger F lifts from the touch panel 10, the moving amount calculation unit 33 calculates the reference moving amount and moving direction of the image display position, based on the distance and the direction from the position of the user's finger F detected by the position detection unit 31 a predetermined time before the user's finger F position is last detected by the position detection unit 31 to the position of the user's finger F last detected by the position detection unit 31. First, the display control unit 32 updates the image display position by moving the image display position in the moving direction by the reference moving amount. Using a value that multiplies the moving amount in a previous update of the image display position by a predetermined coefficient of less than one as the moving amount in a current update, next, the display control unit 32 updates in a predetermined display cycle the image display position in the moving direction until the moving amount becomes equal to or less than the minimum moving amount. Therefore, fluctuations in the total moving time of the image can be suppressed with respect to fluctuations in the moving speed of the user's finger F when the user lifts his or her finger from the touch panel 10. Thus, the image can be scrolled at a speed that corresponds to the user's intention.

If the moving direction of the image display position is limited to a specific direction by the display control unit 32, the moving amount calculation unit 33 calculates the reference moving amount based on the distance of the specific direction component between the position of the user's finger F last detected by the position detection unit 31 and the position of the user's finger F detected a predetermined time beforehand by the position detection unit 31. Therefore, the image can be scrolled in the specific direction at a speed that corresponds to the user's intention.

In addition, if the image is a list formed of a plurality of items, the minimum moving amount is the display width or the display height per list item. It is thus possible to prevent the movement of the list stopping with list items cut off at end portions of the display 20.

If the image is a map, the display control unit 32 uses different values for the movement coefficient depending on the map scale. Therefore, the map can be scrolled at a speed that reflects the user's intention of wanting to slowly scroll through a wide area map displayed and wanting to quickly scroll through a detail map displayed.

### Second Embodiment

A second embodiment of the present invention will be explained here. The second embodiment determines whether there is an association between the user's finger F contacting the touch panel 10 before and after the user's finger F lifts from the touch panel 10, and sets a predetermined coefficient to a value that varies depending on a number of consecutive times of associated contact. The configuration of the second embodiment is generally identical to the configuration of the first embodiment unless otherwise noted. For configurations generally identical to the configuration of the first embodiment, the same reference symbols and/or names as used in the first embodiment are assigned as necessary and accompanying explanations are omitted.

### Processing: Display Control Process

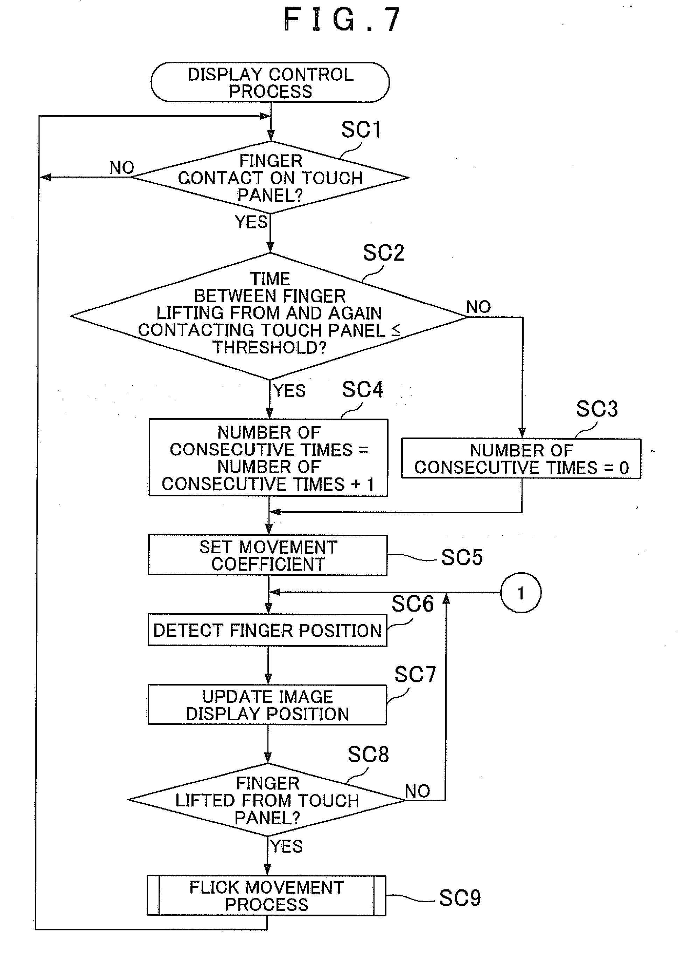

A display control process executed by the display device 1 of the second embodiment will be described. FIG 7 is a flowchart of the display control process according to the second embodiment. Note that, among the display control process according to the second embodiment, SC1 and SC6 to SC9 are identical to SA1 and SA2 to SA5 in FIG 2, respectively, and will not be further explained here.

At SC1 in FIG 7, if it is determined that the user's finger F contacted the touch panel 10 (SC1: Yes), the display control unit 32 determines whether a time between the user's finger F last lifting from the touch panel 10 and again contacting the touch panel 10 is equal to or less than a predetermined threshold (SC2). Note that, for example, if it is determined that the user's finger F lifted from the touch panel 10 at SC8 (SC8: Yes), the position detection unit 31 stores that timing in the data storage unit 40, the RAM, or the like, and in subsequent processing at SC1, the display control unit 32 references that timing to specify a time that "the user's finger F last lifted from the touch panel 10".

Consequently, if the time between the user's finger F last lifting from the touch panel 10 and again contacting the touch panel 10 is not equal to or less than the predetermined threshold (if the time between the user's finger F last lifting from the touch panel 10 and again contacting the touch panel 10 is greater than the predetermined threshold) (SC2: No), the display control unit 32 determines that there is no association between the user's finger F contacting the touch panel 10 before and after the user's finger F lifts from the touch panel 10. The display control unit 32 thus sets a "number of consecutive times" that indicates the number of consecutive times of associated contact to zero (SC3). Note that the "number of consecutive times" is stored in the RAM or the like, for example.

However, if the time between the user's finger F last lifting from the touch panel 10 and again contacting the touch panel 10 is equal to or less than the predetermined threshold (SC2: Yes), the display control unit 32 determines that there is an association between the user's finger F contacting the touch panel 10 before and after the user's finger F lifts from the touch panel 10, and adds one to the "number of consecutive times" stored in the RAM or the like (SC4).

Following the processing at SC3 or SC4, the display control unit 32 determines the movement coefficient used when the display control unit 32 calculates the moving amount at SB4 in FIG 3 in accordance with the number of consecutive times of associated contact (SC5). For example, a greater number of consecutive times of associated contact (that is, the more the user repeats a scrolling operation) results in the display control unit 32 setting a larger movement coefficient. Thus, the image can be scrolled at a speed that corresponds to the user's intention of wanting to quickly scroll the image by repeating a scrolling operation.

### Effects

According to the second embodiment described above, the display control unit 32 determines whether there is an association between the user's finger F contacting the touch panel 10 before and after the user's finger F lifts from the touch panel 10, based on the time between the user's finger F lifting from the touch panel 10 and again contacting the touch panel 10. The display control unit 32 also sets the movement coefficient to a value that varies depending on the number of consecutive times of associated contact. Therefore, for example, the image can be scrolled at a speed that corresponds to the user's intention of wanting to quickly scroll an image by repeating a scrolling operation.

### Modifications of Embodiments

Embodiments of the present invention were explained above. However, the specific configuration and units for implementing the present invention may be modified and improved in any manner or form within the scope of the technical ideas of the present invention as set forth in the claims thereof. Examples of such modifications are explained below.

### Problems to be Solved by the Invention and Effects of the Invention

The problems to be solved by the present invention and the effects of the present invention are not limited to the content described above and may vary depending on the environment in which the present invention is practiced and the detailed configuration thereof. The above problems may be only partially solved, and the above effects only partially achieved.

### Display Control Process

According to the embodiments described above, as an example, in the display control processes in FIGS. 2 and 7, each time the position detection unit 31 detects the finger position (SA2 or SC6), the display control unit 32 updates the display position of the image displayed on the display 20 (SA3 or SC7). However, the finger position detection cycle and the display cycle for updating the image display position may use different values.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A display device (1), comprising:
a display unit (20) that is adapted to display an image;
a touch panel (10) that is provided on a front surface of the display unit (20);
a position detection unit (31) that is adapted to detect a position of a user's finger (F) contacting the touch panel (10) in a predetermined detection cycle;
a display control unit (32) that is adapted to update a display position of the image in accordance with the position of the user's finger (F) detected by the position detection unit (31) in a predetermined display cycle; and
a moving amount calculation unit (32) that is adapted to, if the user's finger (F) lifts from the touch panel (10), calculate a reference moving amount and a moving direction of the display position of the image, based on a distance and a direction from the position of the user's finger (F) detected by the position detection unit (31) a predetermined time before the position of the user's finger (F) is last detected by the position detection unit (31) to the position of the user's finger (F) last detected by the position detection unit (31), wherein
the display control unit (32) is adapted to, if the user's finger (F) lifts from the touch panel (10), first update the display position of the image by moving the display position of the image in the moving direction by the reference moving amount, and next, using a value that multiplies the moving amount in a previous update of the display position of the image by a predetermined coefficient of less than one as the moving amount in a current update, is adapted to update in a predetermined display cycle the display position of the image in the moving direction until the moving amount is equal to or less than a minimum moving amount.

2. The display device (1) according to claim 1, wherein
the moving amount calculation unit (33) is adapted to, if the moving direction of the display position of the image is limited to a specific direction by the display control unit (32), calculate the reference moving amount based on a distance of the specific direction component between the position of the user's finger (F) last detected by the position detection unit (31) and the position of the user's finger (F) detected a predetermined time beforehand by the position detection unit (31).

3. The display device (1) according to claim 1 or 2, wherein
the image is a list formed of a plurality of items, and
the minimum moving amount is one of a display width and a display height per list item.

4. The display device (1) according to claim 1 or 2, wherein
the image is a map, and
the display control unit (32) is adapted to set the predetermined coefficient to a value that varies depending on a scale of the map.

5. The display device (1) according to any one of claims 1 to 4, wherein
the display control unit (32) is adapted to, based on a time between the user's finger (F) lifting from the touch panel (10) and again contacting the touch panel (10), determine whether there is an association between the user's finger (F) contacting the touch panel (10) before and after the user's finger (F) lifts from the touch panel (10), and is adapted to set the predetermined coefficient to a value that varies depending on a number of consecutive times of associated contact.

6. A display method, comprising the steps of:
displaying an image on a display unit (20);
detecting a position of a user's finger (F) contacting a touch panel (10) that is provided on a front surface of the display unit (20) in a predetermined detection cycle;
controlling a display of the image by updating a display position of the image in accordance with the position of the user's finger (F) detected at the position detection step in a predetermined display cycle; and
calculating, if the user's finger (F) lifts from the touch panel (10), a reference moving amount and a moving direction of the display position of the image, based on a distance and a direction from the position of the user's finger (F) detected at the position detection step a predetermined time before the position of the user's finger (F) is last detected at the position detection step to the position of the user's finger (F) last detected at the position detection step, wherein
at the display control step, if the user's finger (F) lifts from the touch panel (10), first, the display position of the image is updated by moving the display position of the image in the moving direction by the reference moving amount, and next, using a value that multiplies the moving amount in a previous update of the display position of the image by a predetermined coefficient of less than one as the moving amount in a current update, the display position of the image is updated in a predetermined display cycle in the moving direction until the moving amount is equal to or less than a minimum moving amount.

7. The display method according to claim 6, wherein
at the moving amount calculating step, if the moving direction of the display position of the image is limited to a specific direction, the reference moving amount is calculated based on a distance of the specific direction component between the position of the user's finger (F) last detected and the position of the user's finger (F) detected a predetermined time beforehand.

8. The method according to claim 6 or 7, wherein
the image is a list formed of a plurality of items, and
the minimum moving amount is one of a display width and a display height per list item.

9. The display method according to claim 6 or 7, wherein
the image is a map, the display method comprising the step of:
setting the predetermined coefficient to a value that varies depending on a scale of the map.

10. The display method according to any one of claims 6 to 9, comprising the steps of:
determining, based on a time between the user's finger (F) lifting from the touch panel (10) and again contacting the touch panel (10), whether there is an association between the user's finger (F) contacting the touch panel (10) before and after the user's finger (F) lifts from the touch panel (10), and
setting the predetermined coefficient to a value that varies depending on a number of consecutive times of associated contact

11. A display program comprising program code which, when run on a computer causes the computer to perform the steps of a method according to any of claims 6 to 10.

12. A computer readable medium comprising computer readable instructions containing a program according to claim 11.
